(19)

Europäisches
Patentamt
European
Patent Office
Office européen
des brevets

(11) **EP 3 477 219 A1**

(12) **EUROPEAN PATENT APPLICATION**
published in accordance with Art. 153(4) EPC

(43) Date of publication:
**01.05.2019 Bulletin 2019/18**

(21) Application number: **17815492.8**

(22) Date of filing: **22.06.2017**

(51) Int Cl.:
*F24J 2/38* (2014.01)    *F24J 2/16* (2006.01)
*H02S 20/32* (2014.01)

(86) International application number:
**PCT/JP2017/023091**

(87) International publication number:
**WO 2017/222026 (28.12.2017 Gazette 2017/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **24.06.2016 JP 2016125265
24.06.2016 JP 2016125269**

(71) Applicant: **SFI Corporation
Tokyo 1050004 (JP)**

(72) Inventor: **TAMAURA Yutaka
Tokyo 143-0023 (JP)**

(74) Representative: **Wibbelmann, Jobst
Wuesthoff & Wuesthoff
Patentanwälte PartG mbB
Schweigerstrasse 2
81541 München (DE)**

(54) **HELIOSTAT APPARATUS AND SOLAR POWER GENERATION METHOD**

(57)    The present invention is a heliostat apparatus, including a frame supporting a reflection mirror or a solar battery panel, a gyro mechanism having an elevation angle rotation axis for rotating the frame in a north-south direction and an azimuth angle rotation axis for rotating it in the east-west direction, the rotation axes being orthogonal to each other, and a support for supporting the frame through the gyro mechanism, in which the frame, the reflection mirror and the like are integrally rotated in the north-south direction with the elevation angle rotation axis as a rotation axis and an angle of the reflection surface of the reflection mirror and the like in the north-south direction is adjusted, the frame, the reflection mirror and the like are integrally rotated in the east-west direction with the azimuth angle rotation axis as a rotation axis and the angle of the reflection surface of the reflection mirror and the like in the east-west direction is adjusted, and the center of gravity of a power generation panel is matched with an intersection where the elevation angle rotation axis and the azimuth angle rotation axis of the gyro mechanism are orthogonal to each other. As a result, the heliostat apparatus of a type made to follow movement of the sun is provided, in which interference of shade is not generated easily as compared with conventional apparatuses even if a disposition interval is made small, and solar energy can be obtained more efficiently.

[FIG. 1]

**Description**

TECHNICAL FIELD

The present invention relates to a heliostat apparatus including a reflection mirror or a solar battery panel and also relates to a solar power generating method using a heliostat apparatus including a solar battery panel.

BACKGROUND ART

Energy has been traditionally produced from fossil fuels such as petroleum, but in recent years, depletion of these fossil fuels and a greenhouse effect gases such as carbon dioxide emitted by use of the fossil fuels and moreover, costs (fuel costs) for purchasing the fossil fuel have become problems.

Thus, sunlight which is renewable and does not need fuel costs has attracted attention as one of new energy sources.

Apparatuses using this sunlight as the energy source include a solar power generating apparatus including a solar battery module (solar battery panel), for example. The solar battery panel includes the one with its installation angle fixed (fixed type) and the one with the angle adjustable in accordance with movement of the sun (solar tracking type) (Patent Literature 1).

Moreover, those including a reflection mirror include a solar heat collecting apparatus such as a tower type, for example. Angles of reflection surfaces of a plurality of the reflection mirrors disposed around the tower are adjusted by heliostat apparatuses, and sunlight is collected to a receiver provided on the tower so as to collect the solar heat.

CITATION LIST

PATENT LITERATURE

Patent Literature 1: Unexamined Patent Publication (Kokai) No. 2003-322418

SUMMARY OF INVENTION

TECHNICAL PROBLEM

In a fixed type panel of the solar power generating apparatus, a power generation amount is maximized when the sun culminates and becomes substantially zero immediately after sunrise and immediately before sunset. The power generation amount gradually increases after the sunrise, is maximized at the culmination and gradually decreases as the sun is setting to the west and becomes substantially zero immediately before the sunset. As described above, the power generation amount changes in a bell shape during a daytime in the fixed type.

Moreover, when the fixed type panel is to be placed in Japan, the power generation amount can be increased though slightly by installing it toward the south with an inclination angle of 20 to 30°. This is because a solar altitude at the time of culmination fluctuates by nearly 50° between summer and winter and it lowers close to 10° in the winter in Japan and thus, the 35° inclination is optimal.

However, in actuality, when the inclination angle gets close to 30°, shades by the fixed type panels on a front row are made on the fixed type panels on a rear row (interference of shades). When a shade is generated on a part of a surface of the solar battery panel, a connection system of a power generation cell is shortcircuited in each system, and the power generation amount lowers on an area larger than the size of the shade in some cases. Thus, a clearance needs to be provided between the panels on the front row and on the panels on the rear row.

With regard to a size of the clearance, optimal angle and clearance are selected in a balance between a loss caused by the shade and an increase by the inclination angle. Actually, the size of the clearance is determined so that a shade is not generated at 9 o'clock and after in the morning.

The maximum solar energy can be obtained by completely covering the whole surface of a ground on which the solar battery panel is to be installed with the solar battery panel so that the sunlight does not irradiate the ground at all.

However, in actuality, if such laying is employed, an access road to each of the fixed type panels cannot be ensured and it makes maintenance in the case of a failure or installation works impossible, which is not realizable.

A clearance needs to be provided in order to ensure the access road and also by considering the "solar altitude at the culmination when the solar battery panel is directed to the sun on an average throughout the year", an inclination angle is set to the aforementioned inclination of 10 to 30° and a clearance is provided between the front row and the rear row in installation, and this clearance which is 0.3 to 0.4 to the land area is used as the access road at the present.

The phrase "solar altitude at the culmination when the solar battery panel is directed to the sun on an average throughout the year" refers to vernal equinox and autumnal equinox, and in Tokyo, Japan, it is 53.6°, and the inclination angle of the panel is 90 - 53.6 = 36.4°. However, considering the shade made on the rear row in the morning and evening, the clearance needs to be made larger or the inclination angle needs to be set further lower.

However, if the clearance is taken too large, the area of the clearance exceeds the minimally required area for the access road, and the exceeding portion becomes an useless ground generating no power and thus, means for enlarging the clearance is not employed.

On the other hand, it is only necessary that the inclination angle is made zero so that the shade is not generated at all times, but the access road cannot be ensured.

As a result, the inclination angle of 10 to 30° is selected. Moreover, the clearance between the front row and the rear row is taken so that the shade of the front row is not made on the rear row at the winter solstice culmination and it is used as the access road.

As described above, an access road is indispensable for a method of installing a solar battery panel by fixing it in a large scale with a mega solar and thus, drop of power generation rate per ground area is an unavoidable problem.

Since the power generation amount is changed in the bell shape in the fixed type solar battery panel during a daytime as described above, instead of this, an installation method of the solar battery panel different from the fixed type so that the power generation amount is constant from 9 o'clock in the morning to almost evening is in demand. Moreover, if the influence of shades can be suppressed in response to the sun changing from time to time and the solar battery panel can be operated so that a place on the ground in the sun is made smaller, the power generation amount per ground can be increased, which is meaningful in development of renewable energy as in Japan with high land prices.

Moreover, since the solar battery panel of the solar tracking type can be directed to the sun, the power generation amount equal to that at the culmination can be obtained when it is directed perpendicular to the sun.

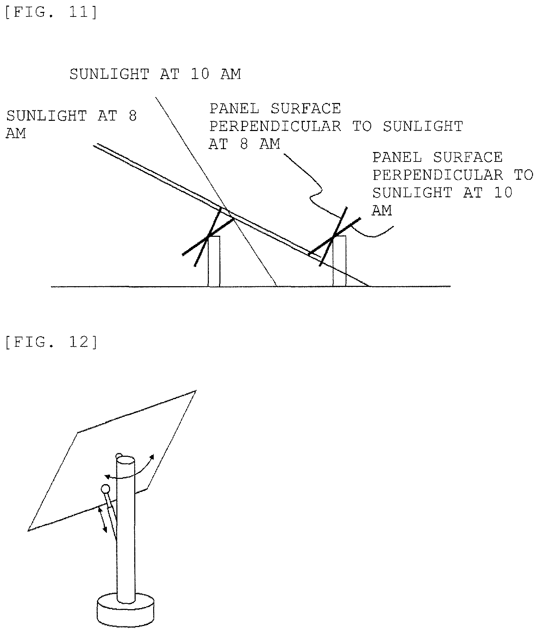

The conventional solar tracking type is called an altazimuth mount type, and as illustrated in Fig. 12, a power generation panel including a solar battery panel and a frame supporting the solar battery panel is supported by a support. And it can be moved vertically and horizontally by vertical rotating means and horizontal rotating means in a state where the power generation panel is directed to the sun at all times.

However, from sunrise when the solar altitude is low to approximately 9 o'clock in the morning and approximately 4 o'clock in the evening before sunset and after, the solar battery panel on the front row makes a shade on the solar battery panel on the rear row and thus, if it is directed right to the sun, the power generation amount is rather lowered. The situation is handled by disposition of each of the solar battery panels away from each other, for example, but they need to be disposed with a clearance larger than that in the case of the fixed type panels, which lowers land use efficiency and leads to drop of the power generation efficiency.

Moreover, in the tower type solar heat collecting apparatus or the like, plural heliostat apparatuses tracking the sun as described above are disposed around the tower, but in order to similarly prevent interference of shades, a certain degree of intervals are needed between each of these heliostat apparatuses.

The present invention was made in view of the aforementioned problems and has an object to provide a heliostat apparatus of a type following movement of the sun in which interference of shades can hardly occur as compared with conventional apparatus even if a disposition interval is made smaller, and solar energy can be obtained more efficiently. Moreover, the present invention has an object to provide a solar power generating method which can suppress occurrence of interference of shades more than before and can obtain solar energy more efficiently by using a heliostat apparatus following the movement of the sun.

SOLUTION TO PROBLEM

In order to achieve the object, the present invention provides a heliostat apparatus including at least one reflection mirror reflecting sunlight or solar battery panel, in which an angle of a reflection surface of the reflection mirror or a panel surface of the solar battery panel is adjusted while causing it to follow movement of the sun, comprising:

> a frame supporting the reflection mirror or the solar battery panel;
> a gyro mechanism having an elevation angle rotation axis for rotating the frame in a north-south direction with an east-west direction as an axial direction and an azimuth angle rotation axis for rotating the frame in the east-west direction with the north-south direction as an axial direction, the elevation angle rotation axis and the azimuth angle rotation axis being orthogonal to each other; and
> a support for supporting the frame through the gyro mechanism, wherein
> by integrally rotating the frame and the reflection mirror or the solar battery panel in the north-south direction with the elevation angle rotation axis as a rotation axis, the angle in the north-south direction of the reflection surface of the reflection mirror or the panel surface of the solar battery panel supported by the frame is adjusted;
> by integrally rotating the frame and the reflection mirror or the solar battery panel in the east-west direction with the azimuth angle rotation axis as a rotation axis, the angle in the east-west direction of the reflection surface of the reflection mirror or the panel surface of the solar battery panel supported by the frame is adjusted; and
the center of gravity of a power generation panel including the frame and the reflection mirror or the solar battery panel supported by the frame is matched with an intersection where the elevation angle rotation axis and the azimuth angle rotation axis of the gyro mechanism are orthogonal to each other.

According to the above, since it is of a gyro type, the angle (an angle of the power generation panel) of the reflection surface of the reflection mirror or the panel surface of the solar battery panel can be adjusted with a higher degree of freedom than the heliostat apparatus not only of the fixed type but also of the solar tracking type in the altazimuth mount type.

Thus, it can be directed to the sun even in a time slot when the solar altitude is low, more solar energy is obtained than the fixed type, and power generation efficiency can be improved. Moreover, even if a plurality of the heliostat apparatuses are juxtaposed and disposed, interference of shades on other heliostat apparatuses do not occur easily as compared with the altazimuth mount type. Thus, disposition with a clearance smaller than that of the altazimuth mount type can be realized, land use efficiency is improved, and the power generation efficiency is also improved.

Furthermore, since the center of gravity of the power generation panel is matched with the intersection (center of the gyro) where the elevation angle rotation axis and the azimuth angle rotation axis of the gyro mechanism are orthogonal to each other, the power generation panel can be rotated easily with a force smaller than that of the conventional altazimuth mount type, and angle adjustment of the solar battery panel can be made with smaller electric power. Therefore, the power generation panel can be operated by supplying electric power to a battery or the like provided in each instead of taking labor in supplying electric power by laying wiring to the heliostat apparatus, and therefore, even a stand-alone type can be realized.

At this time, it is possible that the gyro mechanism includes:

a cylindrical body disposed with a longitudinal direction following the azimuth angle rotation axis;
an azimuth angle rotation shaft penetrating the cylindrical body in the longitudinal direction and located on the azimuth angle rotation axis;
a connecting cover for connecting both ends of the penetrating azimuth angle rotation shaft to each other;
a connecting arm for connecting the connecting cover to the frame; and
a pair of elevation angle rotation shafts protruding from the cylindrical body to a short side direction and located on the elevation angle rotation axis, wherein
the support includes a bearing axially rotatably supporting the pair of elevation angle rotation shafts;
the connecting cover, the connecting arm, and the frame are integrally rotatable in the east-west direction with the azimuth angle rotation shaft on the azimuth angle rotation axis as a rotation axis; and
the cylindrical body, the azimuth angle rotation shaft, the connecting cover, the connecting arm, and the frame are integrally rotatable in the north-south direction on the bearing of the support with the pair of elevation angle rotation shafts on the elevation angle rotation axis as a rotation axis.

With the constitution as above, the angle adjustment of the power generation panel can be made easily with a small force.

Moreover, it is possible that the gyro mechanism includes an elevation angle adjustment actuator for rotating the frame in the north-south direction and an azimuth angle adjustment actuator for rotating the frame in the east-west direction.

According to the above, the angle adjustment of the power generation panel in the north-south direction and the east-west direction can be made easily.

Moreover, a battery for supplying electric power for operating the gyro mechanism can be further provided.

According to the above, even without laying wiring to the heliostat apparatus, the angle adjustment of the power generation panel can be made by operating the gyro mechanism, and a stand-alone type can be realized. Costs required for installation of the wiring, maintenance and the like can be reduced.

Moreover, an auxiliary solar battery panel for charging the battery can be further provided.

According to the above, a stand-alone type can be realized more reliably.

Moreover, a plurality of the reflection mirrors or the solar battery panels can be provided, and the plurality of the reflection mirrors or the solar battery panels can be disposed in a framed shape on the one frame.

According to the above, since a center portion of the framed shape is void, even if wind blows, the wind can be made to escape from the center portion, and even if the power generation panel receives the wind, the heliostat apparatus does not fall easily, and rolling of the power generation panel can be suppressed.

Moreover, the present invention provides a solar power generating method for generating solar power by disposing plural heliostat apparatuses including at least one solar battery panel on the ground while an angle of a panel surface of the solar battery panel of each of the heliostat apparatuses is adjusted by causing it to follow movement of the sun, wherein

the plural heliostat apparatuses are of a gyro type, and if the panel surface of the solar battery panel of each heliostat apparatus directed perpendicularly to sunlight,

in a time slot when shade is not generated on the panel surface of the solar battery panel of another heliostat apparatus by the panel surface of the solar battery panel of each heliostat apparatus,

the angle of the panel surface of the solar battery panel of each heliostat apparatus is adjusted perpendicularly to the sunlight, and

in a time slot when shade is generated on the panel surface of the solar battery panel of another heliostat apparatus by the panel surface of the solar battery panel of each heliostat apparatus,

the shade of the panel surface of the solar battery panel of each heliostat apparatus is made to shift from the panel surface of the solar battery panel of another heliostat apparatus and is generated on the ground, and on the basis of a size of an area of the shade generated on the ground, the angle of the panel surface of the solar battery panel of each heliostat apparatus is adjusted; and

solar power generation is performed.

According to the above, since the gyro type is used, the angle (the angle of the power generation panel) of the panel surface of the solar battery panel can be adjusted with a higher degree of freedom than the heliostat apparatus not only of the fixed type but also of the solar tracking type in the altazimuth mount type. Thus, the apparatus can be directed to the sun even in the time slot when the solar altitude is low, more solar energy is obtained than the fixed type, and the power generation efficiency can be improved. Moreover, even if a plurality of the heliostat apparatuses of this gyro type are juxtaposed and disposed, interference of shades on other heliostat apparatuses does not occur easily as compared with the altazimuth mount type. Thus, disposition with a clearance smaller than that of the altazimuth mount type can be realized, land use efficiency is improved, and the power generation efficiency is also improved.

Moreover, as described above, by separating the way of adjustment of the angle of the panel surface in the solar battery panel which causes the shade between a case where the shade is generated on the panel surface of the solar battery panel of another heliostat apparatus (also referred to simply as another panel surface) and a case where the shade is not generated on another panel surface (that is, between presence and absence of interference of shade), interference of the shade can be reliably prevented, and also by considering the size of an area of the shade on the ground, recovery of solar energy with extremely good efficiency can be promoted.

At this time, it is possible that when the angle of the panel surface of the solar battery panel of each heliostat apparatus is adjusted in a time slot when the shade is generated on the panel surface of the solar battery panel of another heliostat apparatus,

adjustment is made to such an angle of the panel surface that is perpendicular to the sunlight when the sun is located at the altitude and the azimuth angle on the culmination side rather than when a shade is generated on the panel surface of the solar battery panel of the another heliostat apparatus in accordance with a fluctuation curve of the solar altitude and the azimuth angle.

By adjusting as above in accordance with the fluctuation curves (fluctuation curves of the sun) of the solar altitude and the azimuth angle, the solar energy can be obtained more reliably and efficiently.

Moreover, it is possible that when the heliostat apparatus is disposed,

the solar battery panel is supported by a frame,

a gyro mechanism having an elevation angle rotation axis for rotating the frame in the north-south direction with the east-west direction as an axial direction and an azimuth angle rotation axis for rotating the frame in the east-west direction with the north-south direction as an axial direction is provided,

the frame is supported by a support through the gyro mechanism,

the center of gravity of a power generation panel including the frame and the solar battery panel supported by the frame is matched with an intersection where the elevation angle rotation axis and the azimuth angle rotation axis of the gyro mechanism are orthogonal to each other, and

when the angle of the panel surface of the solar battery panel is adjusted,

the angle in the north-south direction of the panel surface of the solar battery panel supported by the frame is adjusted by integrally rotating the frame and the solar battery panel in the north-south direction with the elevation angle rotation axis as a rotation axis, and

the angle in the east-west direction of the panel surface of the solar battery panel supported by the frame is adjusted by integrally rotating the frame and the solar battery panel in the east-west direction with the azimuth angle rotation axis as a rotation axis.

By constituting as above, since the center of gravity of the power generation panel is matched with the intersection (center of the gyro) where the elevation angle rotation axis and the azimuth angle rotation axis of the gyro mechanism are orthogonal to each other, the power generation panel can be rotated easily with a force smaller than that of the conventional altazimuth mount type, and the angle adjustment of the solar battery panel can be made with smaller electric power. Therefore, the power generation panel can be operated by supplying electric power to a battery or the like provided in each instead of taking labor in supplying electric power by laying wiring to the heliostat apparatus, and therefore, even a stand-alone type can be realized.

At this time, it is possible that, as the gyro mechanism,

a cylindrical body disposed with a longitudinal direction following the azimuth angle rotation axis;

an azimuth angle rotation shaft penetrating the cylindrical body in the longitudinal direction and located on the azimuth angle rotation axis;

a connecting cover for connecting both ends of the penetrating azimuth angle rotation shaft to each other;

a connecting arm for connecting the connecting cover to the frame; and

a pair of elevation angle rotation shafts protruding from the cylindrical body to a short side direction and located on the elevation angle rotation shaft are disposed,

as the support, a bearing axially rotatably supporting the pair of elevation angle rotation shaft is disposed, and

when the angle of the panel surface of the solar battery panel is adjusted,

the connecting cover, the connecting arm, and the frame are integrally rotated in the east-west direction with the azimuth angle rotation shaft on the azimuth angle rotation axis as a rotation axis, and

the cylindrical body, the azimuth angle rotation shaft, the connecting cover, the connecting arm, and the frame are integrally rotated in the north-south direction with the pair of elevation angle rotation shafts on the elevation angle rotation axis as a rotation axis on a bearing of the support.

By disposing the one with the constitution as above, the angle adjustment of the power generation panel can be made easily with a small force.

Moreover, it is possible that when the angle of the panel surface of the solar battery panel is adjusted, the adjustment is performed by using an elevation angle adjustment actuator for rotating the frame in the north-south direction and an azimuth angle adjustment actuator for rotating the frame in the east-west direction.

By performing as above, the angle adjustment of the power generation panel in the north-south direction and in the east-west direction can be made easily.

Moreover, it is possible that a battery is further disposed in the heliostat apparatus, the gyro mechanism is operated by supplying an electric power from the battery.

By constituting as above, without laying the wiring to the heliostat apparatus, the angle adjustment of the power generation panel can be made by operating the gyro mechanism, and a stand-along type can be realized. Costs required for installation of the wiring, maintenance and the like can be reduced.

Moreover, it is possible that an auxiliary solar battery panel is further disposed in the heliostat apparatus, and the battery is charged by the auxiliary solar battery panel.

By constituting as above, the heliostat apparatus can be made stand-alone further reliably.

Moreover, it is possible that when the heliostat apparatus is disposed,

a plurality of the solar battery panels are prepared, and the plurality of the solar battery panels are disposed in a framed shape on the one frame.

By constituting as above, since the center portion of the framed shape is void, even if wind blows, the wind can be made to escape from the center portion, and even if the power generation panel receives the wind, the heliostat apparatus does not fall easily, and rolling of the power generation panel can be suppressed.

ADVANTAGEOUS EFFECTS OF INVENTION

As described above, according to the present invention, the angle adjustment of the power generation panel can be made more easily and with more freedom, the sun can be tracked, and even if an arrangement interval between the heliostat apparatuses is small, interference of shade does not occur easily as compared with conventional cases. As a result, solar energy can be obtained efficiently, and power generation efficiency and the like can be improved.

Moreover, since the angle adjustment of the power generation panel is made by separating the cases by presence or absence of occurrence of interference of shade, occurrence of the interference of shade can be reliably prevented, and also by considering the size of the area of the shade on the ground, recovery efficiency of the solar energy can be improved.

BRIEF DESCRIPTION OF DRAWINGS

FIG. 1 is a schematic view illustrating an example of a gyro type heliostat apparatus which can be used for a solar power generating method of the present invention.
FIG. 2 is a side view illustrating an example of a gyro mechanism.
FIG. 3 is a plan view illustrating an example of a cylindrical body of the gyro mechanism.

FIG. 4 is a schematic view illustrating an example of an azimuth angle adjustment actuator.

FIG. 5 is an explanatory view illustrating a state where a power generation panel is rotated to the west side.

FIG. 6 is a schematic view illustrating an example of another aspect of the heliostat apparatus of the present invention.

FIG. 7 is an explanatory view illustrating a state where the power generation panel is installed by changing an angle to the sunlight.

FIG. 8 is an explanatory view illustrating a relationship of a rotation shaft of the gyro type heliostat apparatus.

FIG. 9 is an explanatory view illustrating an adjustment method for preventing interference of shade.

FIG. 10 is an explanatory view illustrating examples of a fluctuation curve of the sun.

FIG. 11 is an explanatory view illustrating an example of presence or absence of the interference of shade.

FIG. 12 is a schematic view illustrating an example of a conventional heliostat apparatus of an altazimuth mount type.

FIG. 13 is a schematic view illustrating an example of the heliostat apparatus of the present invention including reflection mirrors.

DESCRIPTION OF EMBODIMENTS

Hereinafter, the present invention will be described in detail by referring to the drawings as an example of an embodiment, but the present invention is not limited to that.

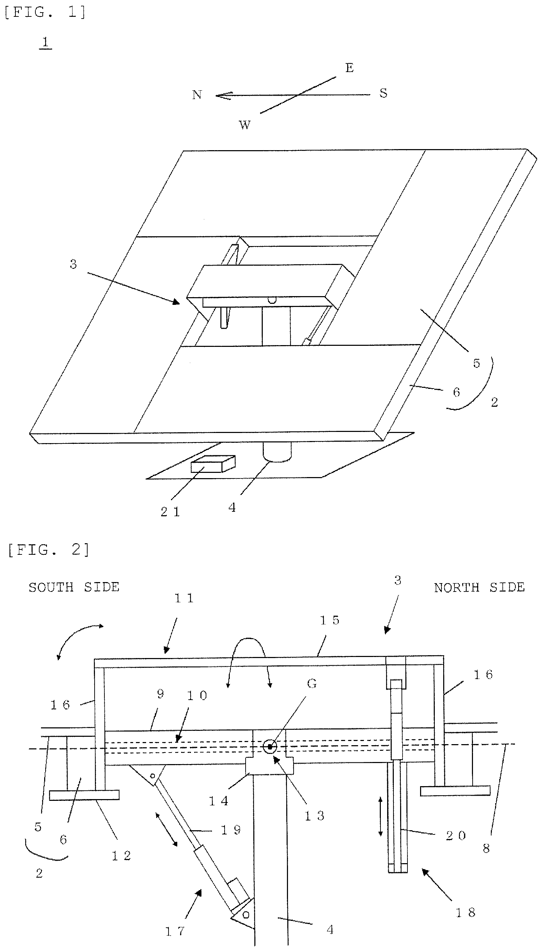

FIG. 1 illustrates an example of a gyro type heliostat apparatus of the present invention which can be used for a solar power generating method of the present invention. In FIG. 1, a direction from the front to the depth is the east-west direction, and a right-and-left direction is the north-south direction.

As illustrated in FIG. 1, the heliostat apparatus 1 includes a power generation panel 2, a gyro mechanism 3, and a support 4 as a whole. Here, the power generation panel 2 is inclined to the west side.

The power generation panel 2 is constituted by a solar battery panel 5 and a frame 6. Here, four rectangular units of the solar battery panels 5 are provided, but it only needs to be one unit or more, and the number, the size or the shape is not particularly limited. These four solar battery panels are supported by the one frame 6. The shape, the material and the like of the frame 6 can be determined as appropriate each time. It can be anything as long as it has such strength that supports the solar battery panel 5 and is not deformed by wind or the like.

Moreover, the shape of the power generation panel 2 itself is not particularly limited, either. In FIG. 1, the entire power generation panel 2 has a framed shape. That is, on the one frame 6, the four solar battery panels 5 are disposed in the framed shape so that a center part is void. By disposing them as above, even if wind blows, the wind blows through the center portion of the power generation panel 2, and rolling of the power generation panel 2 or falling by strong wind can be effectively prevented.

The support 4 only needs to be able to support the power generation panel 2 and the gyro mechanism 3, and its thickness, length and the like are not particularly limited. An appropriate one may be prepared in accordance with the size of the power generation panel 2 or the like.

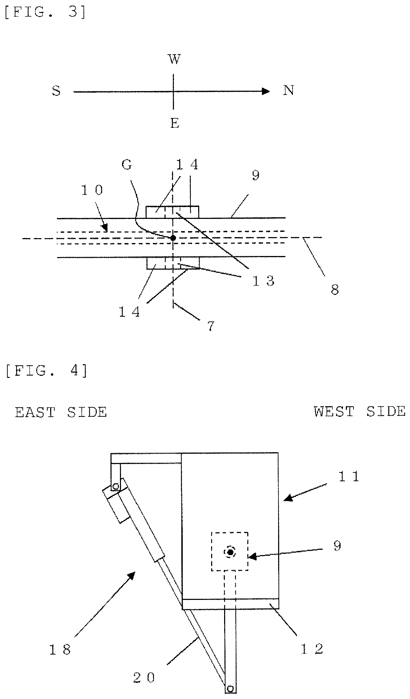

Subsequently, the gyro mechanism 3 will be described. FIGS. 2 and 3 illustrate an example of the gyro mechanism. FIG. 2 is a side view of the heliostat apparatus 1 in FIG. 1 when seen from a rear surface side (east side). The power generation panel 2 is in a horizontal state. Moreover, FIG. 3 is a plan view in the vicinity of the cylindrical body of the gyro mechanism.

As illustrated in FIGS. 2 and 3, the gyro mechanism 3 is connected to the frame 6 and has an elevation angle rotation axis 7 with the east-west direction as an axial direction for rotating the frame 6 (or the power generation panel 2) in the north-south direction and an azimuth angle rotation axis 8 with the north-south direction as an axial direction for rotating it in the east-west direction. The elevation angle rotation axis 7 and the azimuth angle rotation axis 8 are orthogonal to each other. Moreover, the intersection where they are orthogonal to each other matches the center of gravity G of the power generation panel 2 supported by the gyro mechanism 3.

The conventional altazimuth mount type is not a gyro type, and naturally, the center of the gyro does not match the center of gravity G, and a considerable force was required for rotating the power generation panel. However, with the constitution as above as in the present invention, the power generation panel 2 can be rotated easily with an extremely smaller force than before, and the angle adjustment of the solar battery panel 5 can be made with small electric power.

Hereinafter, more specific constitution of the gyro mechanism 3 will be described.

The cylindrical body 9 disposed so that the longitudinal direction follows the azimuth angle rotation axis 8 is provided. Moreover, an azimuth angle rotation shaft 10 penetrating the cylindrical body 9 in the longitudinal direction and located on the azimuth angle rotation axis 8 is provided. Furthermore, a connecting cover 11 for connecting both ends of the penetrating azimuth angle rotation shaft 10 to each other is provided, and connecting arms 12 for connecting to the frame 6 are provided at distal ends of the connecting cover 11.

Connection portions between the azimuth angle rotation shaft 10 and the connecting cover 11 only need to be such that the connecting cover 11 can be rotated in the east-west direction with the azimuth angle rotation shaft 10 as a rotation axis. For example, an aspect can be such that the both are completely connected to each other by welding or the like, and the connecting cover 11 is also rotated with axial rotation of the azimuth angle rotation shaft 10 itself.

Moreover, the cylindrical body 9 may have a square column outer shape or may have a columnar outer shape. It is only necessary that an inside thereof can be penetrated by the azimuth angle rotation shaft 10.

The connecting cover 11 has a U-shape, here, and is constituted by one top plate 15 and two side plates 16 joined so as to sandwich the top plate 15. The side plates 16 are connected to both ends of the azimuth angle shaft 10 penetrating the cylindrical body 9, respectively. When the power generation panel 2 is in the horizontal state, the top plate 15 is located above the cylindrical body 9.

Then, the connecting arms 12 are connected to a side of the side plate 16 opposite to the side joined to the top plate 15, and as described above, the frame 6 is connected to the connecting arms 12. By means of such constitution, the cylindrical body 9, the azimuth angle rotation shaft 10, the connecting cover 11, the connecting arms 12, and the frame 6 are integrated.

Furthermore, a pair of elevation angle rotation shafts 13 protruding to the short side direction of the cylindrical body 9 and located on the elevation angle rotation axis 7 is provided.

On the other hand, a bearing 14 is provided on the support 4, and the pair of elevation angle rotation shafts 13 is supported by the bearing 14, capable of axial rotation.

As described above, the connecting cover 11 can be rotated in the east-west direction with the azimuth angle rotation shaft 10 as a rotation axis, and the connecting cover 11 connects the frame 6, and moreover the solar battery panel 5 through the connecting arms 12, and therefore, they can rotate integrally. That is, the power generation panel 2 can be rotated in the east-west direction, and the angle of the panel surface of the solar battery panel 5 in the east-west direction can be adjusted.

On the other hand, on the bearing 14 of the support 4, the cylindrical body 9 can be rotated in the north-south direction with the elevation angle rotation shaft 13 as a rotation axis, and the cylindrical body 9 is connected to the frame 6 and moreover, to the solar battery panel 5 through the azimuth angle rotation shaft 10 penetrating that, the connecting cover 11, and the connecting arms 12, and therefore, they can rotate integrally. That is, the power generation panel 2 can be rotated in the north-south direction, and the angle of the panel surface of the solar battery panel 5 in the north-south direction can be adjusted.

By means of constitution of the gyro mechanism 3 as above, the power generation panel 2 can be freely rotated easily in the east-west direction and in the north-south direction on the support 4, and the angle of the panel surface of the solar battery panel 5 can be adjusted with a high degree of freedom. With the one of such gyro type, the angle of the panel surface of the solar battery panel 5 can be adjusted more freely than the conventional altazimuth mount type, and occurrence of interference of shade can be further prevented.

For example, consider the gyro type heliostat apparatus of the present invention including the power generation panel in FIG. 1 and the conventional altazimuth mount type as in FIG. 12 including the power generation panel of the same shape.

In the conventional apparatus, after the angle is adjusted in the north-south direction for the power generation panel, the angle adjustment in the east-west direction can be rotated actually only in the horizontal. That is, a lower side (and an upper side) of the power generation panel can be rotated only in parallel with the ground at all times (height positions of both ends of the lower side are the same at all times).

On the other hand, in the heliostat apparatus of the present invention in FIG. 1 including the gyro mechanism as above, after the angle is adjusted in the north-south direction, the entire power generation panel can be rotated in the east-west direction. That is, rotation/adjustment can be made so that the height positions of the both ends of the lower side (and the upper side) of the power generation panel can be made different, and the rotation/adjustment so that their height positions are made the same can be also made.

As described above, even with the solar tracking type, the gyro type as in the present invention is capable of the angle adjustment of the power generation panel with a higher degree of freedom than the conventional altazimuth mount type. Therefore, at such an interval between the heliostat apparatuses that causes interference of shade in the conventional type, the occurrence of interference of shade can be prevented depending on adjustment of the angle with the gyro type as in the present invention. That is, the heliostat apparatuses can be disposed closer to each other, and power generation efficiency per unit land area can be improved.

Moreover, the gyro mechanism 3 further includes an elevation angle adjustment actuator 17 and an azimuth angle adjustment actuator 18. In the gyro mechanism 3 as above, means for rotating the power generation panel 2 is not particularly limited, but an actuator can perform a rotation operation easily by motor driving.

Disposition positions of the elevation angle adjustment actuators 17 include a position illustrated in Fig. 2. It is mounted so as to connect the support 4 and the lower surface side of the cylindrical body 9. When the arm 19 of the elevation angle adjustment actuator 17 is extended by the motor driving, the south side of the cylindrical body 9 is pushed, and the power generation panel 2 can be rotated to the north side. On the other hand, when the arm 19 is contracted, the south side of the cylindrical body 9 is pulled, and the power generation panel 2 can be rotated to the south side.

Fig. 4 illustrates an example of the disposition position of the azimuth angle adjustment actuator 18. Fig. 4 is a schematic view of the azimuth angle adjustment actuator 18 when seen from the north side.

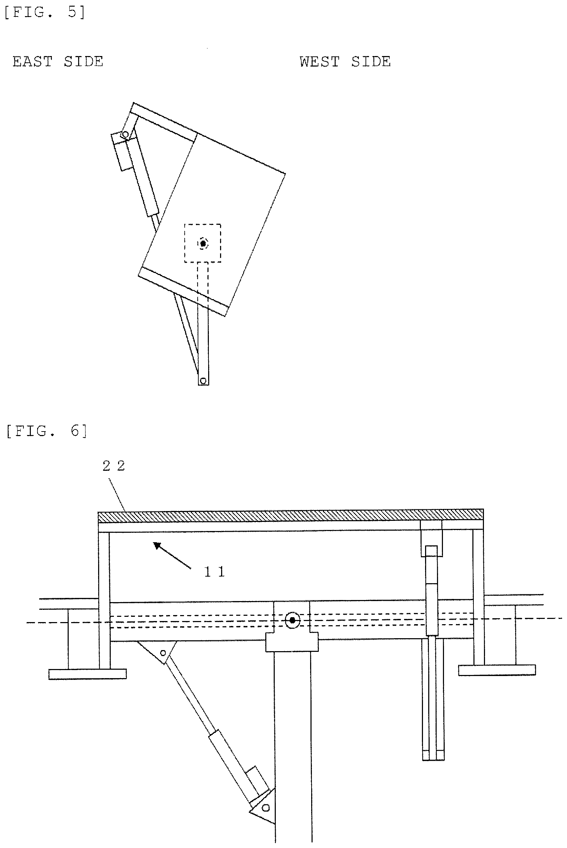

The azimuth angle adjustment actuator 18 is mounted so as to connect a portion protruding to the east side from the connecting cover 11 and a portion protruding from the lower surface of the cylindrical body 9. When the arm 20 of the azimuth angle adjustment actuator 18 is extended by the motor driving, the connecting cover 11 is inclined to the west side, and the power generation panel 2 can be rotated to the west side. Fig. 5 illustrates a state where rotation is made to the west side from the state in Fig. 4. On the other hand, when the arm 20 is contracted, the connecting cover 11 is inclined to the east side, and the power generation panel 2 can be rotated to the east side.

Naturally, they can be disposed at positions different from them, but by disposing them as in Figs. 2, 4, and 5, a truss structure is employed, and therefore, wind resistance can be provided. Each of the actuators can be disposed appropriately so that the angle can be obtained in accordance with a required maximum inclination angle both in the east-west direction and the north-south direction.

Moreover, as illustrated in Fig. 1, a battery 21 is disposed, and electric power for operating the gyro mechanism 3 by driving the motors of these actuators can be supplied.

In the present invention, since the center of the gyro and the center of gravity of the power generation panel 2 are matched with each other as described above, rotation control of the power generation panel 2 can be executed with an extremely small force. Therefore, power consumption required for rotation driving of the power generation panel 2 can be suppressed. Thus, without laying a large-scaled wiring for power supply from the outside as in the conventional apparatuses, the gyro mechanism 3 is sufficiently operated by the battery 21 provided in each of the heliostat apparatuses so as to rotate the power generation panel 2, and the angle adjustment of the panel surface of the solar battery panel 5 can be made. That realizes a stand-alone type in view of power supply.

Costs and maintenance required for installation of the wiring can be omitted, which is simple.

Fig. 6 illustrates an example of the heliostat apparatus of another aspect. In this aspect, an auxiliary solar battery panel 22 is further provided. Here, it is disposed on the connecting cover 11. The electric power obtained by this auxiliary solar battery panel 22 can be charged in the battery 21. Thus, a stand-alone type can be realized further reliably.

A disposition spot, a size and the like of the auxiliary solar battery panel 22 are not particularly limited and only need to be sufficient for charging the battery 21.

In the solar power generating apparatus, the obtained solar energy and an area required for installation of the apparatus will be considered for the solar battery panel (or the power generation panel) of the fixed type, the one including the heliostat apparatus of the solar tracking type of the altazimuth mount type, and the gyro-type heliostat apparatus of the present invention in Fig. 1.

Assuming that the solar energy obtained by the fixed type is 1, the solar tracking type such as the apparatus of the altazimuth mount type and the gyro type of the present invention can cause the panel surface to follow the movement of the sun and thus, the solar energy of even 1.6 to 1.7 can be obtained.

Moreover, assuming the area required for installation of the fixed type solar battery panel is 1, an area of 0.3 is considered to be needed for access roads. That is, the fixed type needs an area of 1.3. The apparatus of the altazimuth mount type needs an area of 1.6 for obtaining the aforementioned solar energy of 1.6 to 1.7. An area larger than that of the fixed type is needed for preventing interference of shades.

On the other hand, with the gyro type as the present invention, each of the heliostat apparatuses can be disposed closer than the apparatus of the altazimuth mount type as described above, and as a whole, the required area is substantially the same as the fixed type, that is, approximately 1.3.

As described above, the gyro-type heliostat apparatus of the present invention can have an installation area of the same degree as that of the fixed type and can obtain the solar energy of the same degree as that of the apparatus of the altazimuth mount type. Thus, the power generation efficiency can be improved than before.

Moreover, the center of the gyro and the center of gravity of the power generation panel are matched with each other, and the rotation control can be executed easily with an extremely small force.

The case including the solar battery panel has been described, but a reflection mirror can be disposed instead of the solar battery panel.

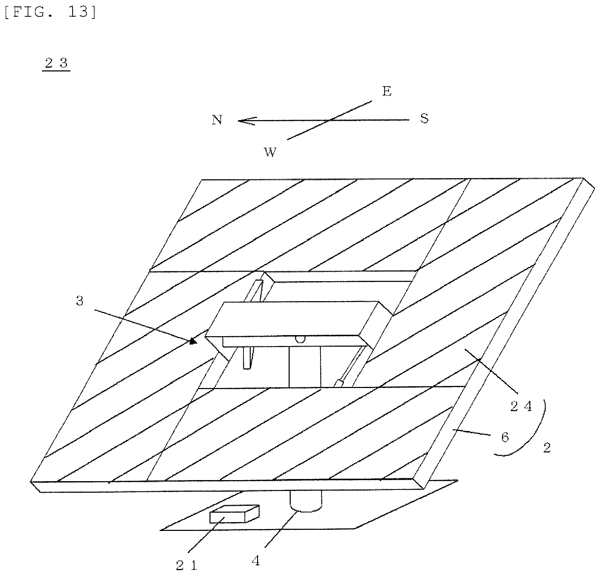

Fig. 13 illustrates an example of the heliostat apparatus in which the reflection mirror is disposed. In a heliostat apparatus 23 in Fig. 13, four rectangular reflection mirrors 24 are disposed. The other constitutions such as the constitutions of the frame, the gyro mechanism, the support and the like, for example, may be similar. Similarly, the reflection mirror 24 is freely rotated in the east-west direction or the north-south direction, and the angle of a reflection surface thereof can be adjusted as appropriate. Moreover, substantially similar effects such that a force required for the rotation is small, a degree of freedom in rotation control is high, occurrence of interference of shades can be suppressed more than before and the like can be provided.

Subsequently, the solar power generating method of the present invention using the gyro-type heliostat apparatus in Fig. 1 will be described.

First, a plurality of the heliostat apparatuses as in Fig. 1 are disposed on the ground. The number to be disposed is not particularly limited but can be determined as appropriate in accordance with a land area capable of installation and solar energy scheduled to be collected. Moreover, the disposition position is not particularly limited, either, but they can be disposed with a certain clearance to each other in the east-west direction and the north-south direction, for example.

When the heliostat apparatus is disposed, as described by referring to Figs. 1 to 6, the aforementioned working effects can be obtained by disposing the frame, the gyro mechanism including, the cylindrical body and the like, the support, the actuator, the battery, the auxiliary solar battery panel and the like in addition to the solar battery panel.

Moreover, as a measure against wind, when the plurality of the solar battery panels are disposed on one frame as in Fig. 1, they may be disposed in the framed shape so that a space is provided in the center portion.

Then, when the angle adjustment of the panel surface of the solar battery panel is made, the angle in the north-south direction of the panel surface of the solar battery panel supported by the frame can be adjusted by integrally rotating the frame and the solar battery panel in the north-south direction with the elevation angle rotation axis as a rotation axis. Moreover, the angle in the east-west direction of the panel surface of the solar battery panel supported by the frame can be adjusted by integrally rotating the frame and the solar battery panel in the east-west direction with the azimuth angle rotation axis as a rotation axis.

More specifically, when the gyro mechanism including the cylindrical body and the like as illustrated in Fig. 2 is disposed, the connecting cover, the connecting arms, and the frame can be integrally rotated in the east-west direction with the azimuth angle rotation shaft on the azimuth angle rotation axis as a rotation axis. Moreover, the cylindrical body, the azimuth angle rotation shaft, the connecting cover, the connecting arms, and the frame can be integrally rotated in the north-south direction with the pair of elevation angle rotation shafts on the elevation angle rotation axis as a rotation axis.

The power generation panel is rotated as above, and the angle of the panel surface of the solar battery panel (the angle of the power generation panel) can be adjusted easily with a small force.

Subsequently, a method of adjusting the angle of the panel surface of the solar battery panel (the angle of the power generation panel) when the solar power generation is actually performed will be described.

In the present invention, since the gyro-type heliostat apparatus is used, unlike the fixed type, the power generation panel can be directed perpendicularly to the sunlight even in a time slot when the solar altitude is low.

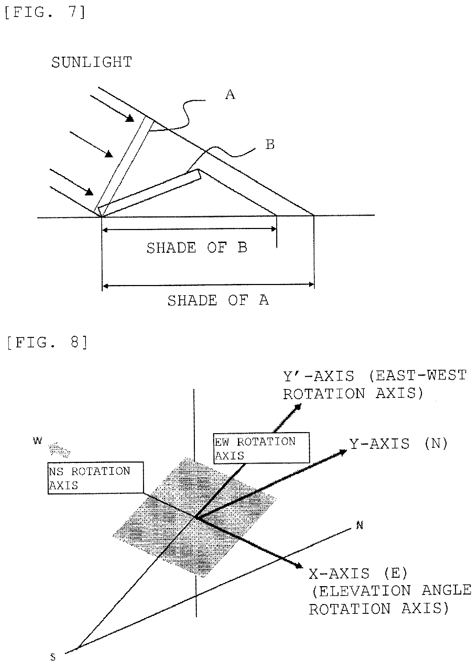

When it is directed perpendicularly as above, the solar energy can be recovered the most as illustrated in Fig. 7. Fig. 7 illustrates a state where the power generation panel is installed with an angle to the sunlight changed. Reference character A is a state of the installation perpendicular to the sunlight, and reference character B is a state of installation at an angle lower than the A state. The sunlight amount irradiated to the power generation panel is larger in A. An area of the shade on the ground is also larger in A.

As described above, when the solar power generation is performed, it is preferable that the angle of the power generation panel is controlled so as to be perpendicularly to the sunlight as much as possible and as much solar energy as possible is recovered.

However, in a time slot when the solar altitude is particularly low, shade can be generated on another panel surface by the power generation panel directed perpendicular to the sunlight in some cases. The disposition positions of the heliostat apparatuses can be separated from each other, but it lowers land use efficiency and incurs lowering of power generation efficiency as a result.

Thus, in the present invention, cases are separated by whether occurrence of interference of shade occurs or not when the power generation panel is directed perpendicular to the sunlight, and the solar power generation is performed while the angle of the power generation panel is adjusted.

More specifically, first, when the power generation panel is directed perpendicular to the sunlight, in a time slot when shade is not generated on another panel surface, the angle of the power generation panel is adjusted perpendicular to the sunlight.

On the other hand, in a time slot when shade is generated on another panel surface, angle adjustment of the power generation panel is made under two conditions. The first condition is that adjustment is made so that the shade of the power generation panel shifts from another panel surface and is generated on the ground. The second condition is that adjustment is made on the basis of a size of an area of the shade generated on the ground. As described also in Fig. 7, more solar energy can be recovered when the power generation panel is directed perpendicularly to the sunlight, and the shade on the ground at that time is larger. That is, while the first condition is met, the angle is adjusted by considering the size of the shade on the ground. For example, the angle is preferably adjusted so that the shade on the ground becomes larger. Conversely, it is a control method which makes an area where the sunlight irradiates the ground smaller while interference of shade is prevented, and such control method also considering the size of the shade on the ground is found by the inventor for the first time.

Various angle adjustment patterns can be considered in accordance with the disposition position of each of the heliostat apparatuses, an adjustment frequency of the angle of the power generation panel, the solar energy recovery amount to be acquired and the like.

In the following, an example among them will be cited and described with merits of the gyro type, but it is not limiting naturally.

Fig. 8 illustrates a relationship of the rotation axis of the gyro-type heliostat apparatus.

When x, y, and z axes are taken for directions of the east, the north, and the zenith, respectively, as in Fig. 8, the rotation axis in the north-south direction is the x-axis (elevation angle rotation axis), and a y'-axis after rotation of the x-axis becomes a rotation axis in the east-west direction (azimuth angle rotation axis) in the gyro type.

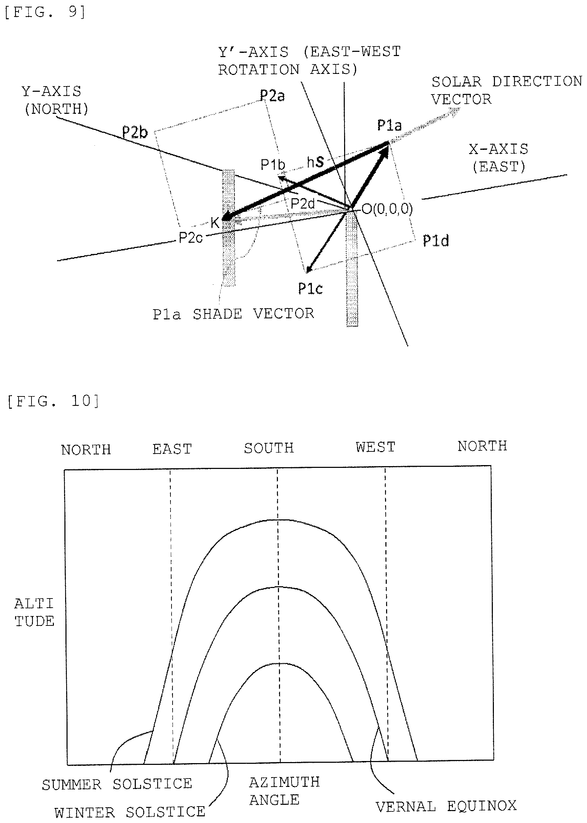

Fig. 9 illustrates an explanatory view on an adjusting method for preventing interference of shade.

As illustrated in Fig. 9, the shape of the solar battery panel mounted on the heliostat apparatus is assumed to be a regular square, and this is rotated using two axes as above, and each of four corners at that time is assumed to be positions Pa, Pb, Pc, and Pd (positions P1a, P1b, P1c, and P1d on the front row panel and P2a, P2b, P2c, and P2d on the rear row panel). Position vectors at four corners with the center of the solar battery panel as an origin O (0, 0, 0) are assumed to be Pa, Pb, Pc and Pd, respectively.

With regard to the shade generated between the front and rear solar battery panels, when control is executed such that a shade from a point at the position P1a on the front row comes to a K point (position vector k) on a line from the position P2c to the position P2d on the rear row as in Fig. 9, the following is obtained:

$$hS = P1a - k \quad (equation\ 1)$$

where numeral values 1 and 2 given to the four corners of each of the solar battery panels in Fig. 9 indicate front and rear of the panel, and reference character S denotes a direction vector of the sun.

A z component of the hS vector is:

$$hSz = Zp1a - Zk \quad (equation\ 1')$$

and each term on the right side of this equation indicates the z component of each vector of vectors P1a, k.

Here, in the gyro type, the z components of the vectors Pa, Pd and the vectors Pb, Pc do not have the same value except the culmination. Therefore, in other than the culmination:

$$Zp1a \neq Zp1b,\ Zp1c \neq Zp1d \quad (equation\ 2),$$

and

$$Zp2a \neq Zp2b,\ Zp2c \neq Zp2d \quad (equation\ 3)$$

That is, in the gyro type, the y-axis is not in parallel with the ground any more by the x-axis rotation and (the y'-axis, that is, the y-axis having an angle for the x-axis rotation with the ground to the ground) becomes the rotation axis in the east-west direction and thus, when the north-south axis has a certain angle (it is zero only at the north pole spot and the south pole spot and usually, it has a certain limited angle in any case), a line segment P1aP1b and a line segment P1cP1d do not become in parallel with the ground by the rotation of this rotation in the y'-axis direction except the culmination. By configuring such that the solar battery panels on the rear row also take the same rotation angles for these line segments, a certain value can be taken in any case so that the shade generated with respect to a certain solar direction vector (sunlight) does not interfere with the rear solar battery panel.

As a result, control can be executed so that the interference of shade as illustrated in Fig. 9 does not occur in any case by the aforementioned equation in the gyro type. According to such control for avoiding the interference of shade, a portion not irradiated by the sun on the ground can be made smaller, and a solar power generation amount per land area can be increased.

Moreover, how to acquire a value satisfying the aforementioned equation is not particularly limited but as an example, it can be acquired by using a fluctuation curve of the sun. Fig. 10 illustrates examples of the fluctuation curve of the sun. Movements of the sun according to a season and time are plotted, and the movements of the sun at the vernal equinox, the winter solstice and the summer solstice are plotted in Fig. 10. The sun moves along such fluctuation curve. Thus, a position (an altitude, an azimuth angle) of the sun in certain season can be specified, and the adjustment angle of the power generation panel so as to be perpendicular to the sunlight can be acquired in advance.

At this time, if a disposition interval between the heliostat apparatuses is also determined, whether interference of shade occurs in that season can be also acquired easily.

If the interference of shade does not occur, the angle is adjusted so as to be perpendicular to the sunlight as described above.

On the other hand, if interference of shade occurs, adjustment is made so as to satisfy the aforementioned two conditions.

As the first condition, a value which satisfies the aforementioned equation 1 and equation 1' (z component) and the like is acquired so that the interference of shade is eliminated. Assume that the interference of shade occurs when it is directed perpendicular to the sunlight at the time of 8 o'clock in the morning, for example. At this time, in order to eliminate the interference of shade, the power generation panel can be considered to be laid down so as to become more horizontal.

Here, the second condition will be also considered at the same time. As described above, the sun moves in accordance with this fluctuation curve and thus, the adjustment angle of the power generation panel so as to be perpendicular to the sunlight is known in advance. Moreover, if the power generation panel is directed more perpendicular to the sunlight, it is more effective in view of energy recovery, and the area of the shade on the ground is larger. Thus, the inventor considered that, when the power generation panel was to be laid down in order to eliminate interference of shades, by performing the angle adjustment in accordance with the movement of the sun of the day, the area of the shade on the ground could be made relatively larger (that is, the solar energy could be recovered more efficiently), and an appropriate angle could be acquired more easily.

More specifically, the adjustment can be made to an angle directed perpendicularly to the sunlight at a position (an altitude, an azimuth angle) of the sun at the time of 10 o'clock in the morning of the day, for example. By making adjustment as above by considering the fluctuation curve of the sun, there is no need to uselessly move the angle of the power generation panel largely in order to eliminate the interference of shade and the area of the shade on the ground can be kept larger. Therefore, the amount of the sunlight irradiating not the power generation panel but the ground can be suppressed, and the solar energy can be recovered efficiently.

There are various angles satisfying the first condition. However, by considering even the area of the shade on the ground and by considering the fluctuation curve of the sun so that the area of the shade becomes larger particularly, the movement of the sun and moreover, the angle of the power generation panel at that time is narrowed to some degree and thus, the angle satisfying the first condition at the same time can be derived easily.

An example of presence of interference of shade at 8 o'clock and 10 o'clock in the morning above is illustrated in Fig. 11. In order to facilitate understanding, the sunlight and boundary lines of the shades formed by an upper part of the power generation panel on the front row are drawn. When the power generation panel of each of the heliostat apparatuses is directed perpendicularly to the sunlight at the time of 8 o'clock in the morning, shade is generated on another panel surface on the rear row by the panel surface on the front row. However, by adjusting the angle of the power generation panel of each of the heliostat apparatuses to an angle directed perpendicularly to the sunlight at the time of 10 o'clock in the morning of the day, the interference of shade can be prevented at 8 o'clock in the morning.

In the afternoon, the angle adjustment is preferably made by going back in time. In brief, the adjustment is preferably made to an angle perpendicular to the sunlight when the sun is located at the altitude and the azimuth angle on the culmination side rather than when interference of shade occurs. To what degree the angle adjustment is made by shifting to the culmination side may be determined each time and it is not particularly limited.

These angle calculations can be made in advance through simulation by using the disposition position of each of the heliostat apparatuses and the fluctuation curve of the sun.

Therefore, by performing programing in advance on the basis of the calculation result, determination on whether the interference of shade occurs or not and appropriate angle adjustment as described above can be automatically made in accordance with the season and the time.

By executing the angle adjustment of the power generation panel while utilizing the characteristics of the gyro-type heliostat apparatus as in the present invention, more solar energy can be recovered with a smaller land area more reliably as compared with the fixed type or the altazimuth mount type apparatus as described above, and power generation efficiency can be markedly improved.

The present invention is not limited to the aforementioned embodiment. The aforementioned embodiment is exemplification and any of those having substantially the same configuration as the technical idea described in the scope of claims of the present invention and exerting the similar working effects are included in a technical range of the present invention.

**Claims**

1. A heliostat apparatus including at least one reflection mirror reflecting sunlight or solar battery panel, in which an angle of a reflection surface of the reflection mirror or a panel surface of the solar battery panel is adjusted while causing it to follow movement of the sun, comprising:

a frame supporting the reflection mirror or the solar battery panel;

a gyro mechanism having an elevation angle rotation axis for rotating the frame in a north-south direction with an east-west direction as an axial direction and an azimuth angle rotation axis for rotating the frame in the east-west direction with the north-south direction as an axial direction, the elevation angle rotation axis and the azimuth angle rotation axis being orthogonal to each other; and

a support for supporting the frame through the gyro mechanism, wherein

by integrally rotating the frame and the reflection mirror or the solar battery panel in the north-south direction with the elevation angle rotation axis as a rotation axis, the angle in the north-south direction of the reflection surface of the reflection mirror or the panel surface of the solar battery panel supported by the frame is adjusted;

by integrally rotating the frame and the reflection mirror or the solar battery panel in the east-west direction with the azimuth angle rotation axis as a rotation axis, the angle in the east-west direction of the reflection surface of the reflection mirror or the panel surface of the solar battery panel supported by the frame is adjusted; and

the center of gravity of a power generation panel including the frame and the reflection mirror or the solar battery panel supported by the frame is matched with an intersection where the elevation angle rotation axis and the azimuth angle rotation axis of the gyro mechanism are orthogonal to each other.

2. The heliostat apparatus according to claim 1, wherein
the gyro mechanism includes:

a cylindrical body disposed with a longitudinal direction following the azimuth angle rotation axis;

an azimuth angle rotation shaft penetrating the cylindrical body in the longitudinal direction and located on the azimuth angle rotation axis;

a connecting cover for connecting both ends of the penetrating azimuth angle rotation shaft to each other;

a connecting arm for connecting the connecting cover to the frame; and

a pair of elevation angle rotation shafts protruding from the cylindrical body to a short side direction and located on the elevation angle rotation axis, wherein

the support includes a bearing axially rotatably supporting the pair of elevation angle rotation shafts;

the connecting cover, the connecting arm, and the frame are integrally rotatable in the east-west direction with the azimuth angle rotation shaft on the azimuth angle rotation axis as a rotation axis; and

the cylindrical body, the azimuth angle rotation shaft, the connecting cover, the connecting arm, and the frame are integrally rotatable in the north-south direction on the bearing of the support with the pair of elevation angle rotation shafts on the elevation angle rotation axis as a rotation axis.

3. The heliostat apparatus according to claim 1 or 2, wherein
the gyro mechanism includes an elevation angle adjustment actuator for rotating the frame in the north-south direction and an azimuth angle adjustment actuator for rotating the frame in the east-west direction.

4. The heliostat apparatus according to any one of claims 1 to 3, further comprising:
a battery for supplying electric power for operating the gyro mechanism.

5. The heliostat apparatus according to claim 4, further comprising:
an auxiliary solar battery panel for charging the battery.

6. The heliostat apparatus according to any one of claims 1 to 5, comprising:
a plurality of the reflection mirrors or the solar battery panels, wherein the plurality of the reflection mirrors or the solar battery panels are disposed in a framed shape on the one frame.

7. A solar power generating method for generating solar power by disposing plural heliostat apparatuses including at least one solar battery panel on the ground while an angle of a panel surface of the solar battery panel of each of the heliostat apparatuses is adjusted by causing it to follow movement of the sun, wherein

the plural heliostat apparatuses are of a gyro type, and if the panel surface of the solar battery panel of each heliostat apparatus directed perpendicularly to sunlight,

in a time slot when shade is not generated on the panel surface of the solar battery panel of another heliostat apparatus by the panel surface of the solar battery panel of each heliostat apparatus,

the angle of the panel surface of the solar battery panel of each heliostat apparatus is adjusted perpendicularly to the sunlight, and

in a time slot when shade is generated on the panel surface of the solar battery panel of another heliostat apparatus by the panel surface of the solar battery panel of each heliostat apparatus,

the shade of the panel surface of the solar battery panel of each heliostat apparatus is made to shift from the panel surface of the solar battery panel of another heliostat apparatus and is generated on the ground, and on the basis of a size of an area of the shade generated on the ground, the angle of the panel surface of the solar battery panel of each heliostat apparatus is adjusted; and
solar power generation is performed.

8. The solar power generating method according to claim 7, wherein
when the angle of the panel surface of the solar battery panel of each heliostat apparatus is adjusted in a time slot when the shade is generated on the panel surface of the solar battery panel of another heliostat apparatus,
adjustment is made to such an angle of the panel surface that is perpendicular to the sunlight when the sun is located at the altitude and the azimuth angle on the culmination side rather than when a shade is generated on the panel surface of the solar battery panel of the another heliostat apparatus in accordance with a fluctuation curve of the solar altitude and the azimuth angle.

9. The solar power generating method according to claim 7 or 8, wherein
when the heliostat apparatus is disposed,
the solar battery panel is supported by a frame,
a gyro mechanism having an elevation angle rotation axis for rotating the frame in the north-south direction with the east-west direction as an axial direction and an azimuth angle rotation axis for rotating the frame in the east-west direction with the north-south direction as an axial direction is provided,
the frame is supported by a support through the gyro mechanism,
the center of gravity of a power generation panel including the frame and the solar battery panel supported by the frame is matched with an intersection where the elevation angle rotation axis and the azimuth angle rotation axis of the gyro mechanism are orthogonal to each other, and
when the angle of the panel surface of the solar battery panel is adjusted,
the angle in the north-south direction of the panel surface of the solar battery panel supported by the frame is adjusted by integrally rotating the frame and the solar battery panel in the north-south direction with the elevation angle rotation axis as a rotation axis, and
the angle in the east-west direction of the panel surface of the solar battery panel supported by the frame is adjusted by integrally rotating the frame and the solar battery panel in the east-west direction with the azimuth angle rotation axis as a rotation axis.

10. The solar power generating method according to claim 9, wherein
as the gyro mechanism,
a cylindrical body disposed with a longitudinal direction following the azimuth angle rotation axis;
an azimuth angle rotation shaft penetrating the cylindrical body in the longitudinal direction and located on the azimuth angle rotation axis;
a connecting cover for connecting both ends of the penetrating azimuth angle rotation shaft to each other;
a connecting arm for connecting the connecting cover to the frame; and
a pair of elevation angle rotation shafts protruding from the cylindrical body to a short side direction and located on the elevation angle rotation shaft are disposed,
as the support, a bearing axially rotatably supporting the pair of elevation angle rotation shaft is disposed, and
when the angle of the panel surface of the solar battery panel is adjusted,
the connecting cover, the connecting arm, and the frame are integrally rotated in the east-west direction with the azimuth angle rotation shaft on the azimuth angle rotation axis as a rotation axis, and
the cylindrical body, the azimuth angle rotation shaft, the connecting cover, the connecting arm, and the frame are integrally rotated in the north-south direction with the pair of elevation angle rotation shafts on the elevation angle rotation axis as a rotation axis on a bearing of the support.

11. The solar power generating method according to claim 9 or 10, wherein
when the angle of the panel surface of the solar battery panel is adjusted,
the adjustment is performed by using an elevation angle adjustment actuator for rotating the frame in the north-south direction and an azimuth angle adjustment actuator for rotating the frame in the east-west direction.

12. The solar power generating method according to any one of claims 9 to 11, wherein
a battery is further disposed in the heliostat apparatus, the gyro mechanism is operated by supplying an electric power from the battery.

**13.** The solar power generating method according to claim 12, wherein
an auxiliary solar battery panel is further disposed in the heliostat apparatus, and the battery is charged by the auxiliary solar battery panel.

**14.** The solar power generating method according to any one of claims 9 to 13, wherein
when the heliostat apparatus is disposed,
a plurality of the solar battery panels are prepared, and the plurality of the solar battery panels are disposed in a framed shape on the one frame.

[FIG. 1]

1

N ← E
S
W

3

5
6
2

21    4

[FIG. 2]

SOUTH SIDE          3    NORTH SIDE

11          15

16          16

9    10    G

16

5    14    20    8
6    13
12
2    19    18
17    4

[FIG. 3]

W

S ——————————————→ N

E

[FIG. 4]

EAST SIDE                    WEST SIDE

[FIG. 5]

EAST SIDE                    WEST SIDE

[FIG. 6]

[FIG. 7]

SUNLIGHT

A

B

SHADE OF B

SHADE OF A

[FIG. 8]

Y'-AXIS (EAST-WEST ROTATION AXIS)

W

EW ROTATION AXIS

Y-AXIS (N)

NS ROTATION AXIS

N

X-AXIS (E) (ELEVATION ANGLE ROTATION AXIS)

S

[FIG. 9]

Pla SHADE VECTOR

[FIG. 10]

[FIG. 11]

SUNLIGHT AT 10 AM

SUNLIGHT AT 8 AM

PANEL SURFACE PERPENDICULAR TO SUNLIGHT AT 8 AM

PANEL SURFACE PERPENDICULAR TO SUNLIGHT AT 10 AM

[FIG. 12]

[FIG. 13]

23

## INTERNATIONAL SEARCH REPORT

| | International application No. |
|---|---|
| | PCT/JP2017/023091 |

A.  CLASSIFICATION OF SUBJECT MATTER
*F24J2/38*(2014.01)i, *F24J2/16*(2006.01)i, *H02S20/32*(2014.01)i

According to International Patent Classification (IPC) or to both national classification and IPC

B.  FIELDS SEARCHED

Minimum documentation searched (classification system followed by classification symbols)
F24J2/38, F24J2/16, H02S20/32

Documentation searched other than minimum documentation to the extent that such documents are included in the fields searched
Jitsuyo Shinan Koho        1922–1996   Jitsuyo Shinan Toroku Koho   1996–2017
Kokai Jitsuyo Shinan Koho  1971–2017   Toroku Jitsuyo Shinan Koho   1994–2017

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y | WO 2014/071683 A1  (LIU, Jianzhong),<br>15 May 2014 (15.05.2014),<br>page 5, line 9 to page 8, line 5; fig. 1 to 3<br>& CN 102968125 A      & CN 103324204 A<br>& CN 203312327 U | 1-3<br>4-14 |
| Y | WO 2015/037230 A1  (SolarFlame Corp.),<br>19 March 2015 (19.03.2015),<br>paragraphs [0111] to [0115]<br>& JP 2015-118360 A      & US 2016/0226437 A1<br>& EP 3045838 A1<br>paragraphs [0190] to [0195] | 4-6,12-14 |

☒  Further documents are listed in the continuation of Box C.      ☐  See patent family annex.

| * | Special categories of cited documents: |
|---|---|
| "A" | document defining the general state of the art which is not considered    to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>    07 September 2017 (07.09.17) | Date of mailing of the international search report<br>    26 September 2017 (26.09.17) |
|---|---|
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2017/023091

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2013-225650 A  (Topper Sun Energy Technology Co., Ltd.), 31 October 2013 (31.10.2013), paragraphs [0030] to [0034]; fig. 1 to 2 & US 2013/0276862 A1    & EP 2657623 A2 paragraphs [0027] to [0030]; fig. 1 to 2 & TW 201344131 A        & KR 10-2013-0119337 A & RU 2013115525 A | 6,14 |
| Y | JP 2011-66030 A  (Mitsubishi Electric Corp.), 31 March 2011 (31.03.2011), paragraphs [0014] to [0018]; fig. 3, 4, 7 (Family: none) | 7-14 |
| A | WO 2013/129177 A1  (Mitsubishi Heavy Industries, Ltd.), 06 September 2013 (06.09.2013), paragraphs [0120] to [0126]; fig. 3, 9 to 10 & US 2015/0000278 A1 paragraphs [0154] to [0160]; fig. 3, 9 to 10 | 1-14 |
| A | JP 2004-235284 A  (Daido Steel Co., Ltd.), 19 August 2004 (19.08.2004), paragraphs [0009] to [0013]; fig. 1 to 3 (Family: none) | 1-14 |
| A | JP 3158018 U  (Suntop Solar Energy Co., Ltd.), 11 March 2010 (11.03.2010), paragraphs [0010] to [0012], [0022]; fig. 2, 7, 10 & US 2011/0132352 A1    & EP 2336673 A2 paragraphs [0010] to [0012], [0018]; fig. 2, 7, 10 & TW 00M378286 U | 1-14 |
| A | US 4586488 A  (NOTO, Vincent H.), 06 May 1986 (06.05.1986), abstract & AU 5413586 A | 1-14 |
| A | DE 102008023549 A1  (DIECKMANN, Klaus E.), 19 November 2009 (19.11.2009), abstract (Family: none) | 1-14 |
| A | JP 2014-527794 A  (Morgan Solar Inc.), 16 October 2014 (16.10.2014), paragraphs [0040] to [0041] & US 2013/0319508 A1    & WO 2013/024369 A1 paragraphs [0040] to [0041] & CN 103858336 A | 1,9 |

Form PCT/ISA/210 (continuation of second sheet) (January 2015)

**INTERNATIONAL SEARCH REPORT**

International application No.

PCT/JP2017/023091

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2010-205762 A  (Mitsubishi Electric Corp.), 16 September 2010 (16.09.2010), paragraphs [0016] to [0024]; fig. 9 to 11 (Family: none) | 7 |
| P,A | JP 2017-28907 A  (Yutaka TAMAURA), 02 February 2017 (02.02.2017), abstract; paragraphs [0024] to [0042] (Family: none) | 7-14 |

Form PCT/ISA/210 (continuation of second sheet) (January 2015)

**EP 3 477 219 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2003322418 A